# EUROPÄISCHE PATENTSCHRIFT

(11) **EP 3 422 994 B1**
(45) Veröffentlichungstag und Bekanntmachung des Hinweises auf die Patenterteilung: **20.10.2021**
(21) Anmeldenummer: 17706472.2
(22) Anmeldetag: 21.02.2017
(51) Int. Cl.: A61C 7/14, A61C 7/28

(54) **KIEFERORTHOPÄDISCHES BRACKET**
ORTHODONTIC BRACKET
ATTACHE ORTHODONTIQUE

(30) Priorität: 01.03.2016 CH 2642016
(43) Veröffentlichungstag der Anmeldung: 09.01.2019
(73) Patentinhaber: Von Mandach, Christoph, 5225 Bözberg (CH)
(72) Erfinder: Von Mandach, Christoph, 5225 Bözberg (CH)
(74) Vertreter: Keller Schneider Patent- und Markenanwälte AG (Zürich)
(86) Internationale Anmeldenummer: PCT/EP2017/053941
(87) Internationale Veröffentlichungsnummer: WO 2017/148749

(56) Entgegenhaltungen:
- EP-A1- 1 374 795
- WO-A1-2015/140026
- GB-A- 2 451 460
- JP-A- S61 228 847
- US-A- 2 971 258
- US-A- 3 119 182
- US-A- 3 686 762
- US-A- 4 028 809
- US-A- 4 242 085
- US-A1- 2009 117 510

## Beschreibung

Die vorliegende Erfindung betrifft ein aus Blech biegestanztechnisch gefertigtes kieferorthopädisches Bracket, umfassend eine Basisplatte mit einer Klebeseite und einer Sichtseite und Mitteln zur geführten Halterung eines Behandlungsbogens.

Die Erfindung betrifft des weiteren zusätzlich die hierzu erforderlichen Mittel zum Setzen des Brackets.

In den Anfangszeiten der Orthodentaltechnik wurden viele Orthodentalapparaturen aus Blech biegestanztechnisch gefertigt und auf Bändern befestigt, die einen Zahn umgreifend befestigt waren. Eine solche Lösung zeigt beispielsweise die US PS 1 142 790, die von Herrn E.H. Angle bereits 1915 angemeldet wurde. Herr Angle gehört zu den eigentlichen Begründern der Orthodentaltechnik. Weitere Beispiele solcher biegestanztechnisch gefertigter Brackets sind beispielsweise aus der US 2 971 258, der US 2 686 365, der US 2 257 069, der US 3 076 265 oder auch als ein selbstlegierendes Bracket aus der US 3 218 713 bekannt. Eines der einfachsten und sinnvollsten Versionen eines solchen Brackets zeigt die US 2 265 420. Das hier gezeigte biegestanztechnisch gefertigte Bracket ist einstückig, besitzt eine Klebeseite und eine Sichtseite und ist mit Mitteln zur geführten Halterung eines Behandlungsbogens ausgestattet. Dieses Bracket war selbstverständlich auch wieder direkt auf einem Band aufgelötet und noch nicht direkt auf dem Zahn aufgeklebt. Die hier gezeigte Lösung hat zwei seitliche Befestigungslaschen, mit denen das Bracket auf einem Band aufgelötet wurde und anschliessend an diese Laschen sind zwei haarnadelförmige gebogene Flansche, die über einem Nutboden miteinander verbunden sind. Der so gebildete, in etwa U-förmige Kanal ist zur offenen Seite hin verjüngend, so dass zwischen den beiden seitlichen Flanschen der Behandlungsbogen klemmend eingelegt werden kann. Der Behandlungsbogen liess sich in diesem U-förmigen Kanal nicht wirklich sichern, und durch Essensreste konnte der Behandlungsbogen aus dem U-förmigen Kanal gedrückt werden. Eine Sicherung mittels Ligaturen war bei diesem Bracket nicht möglich.

Durch die immer weiter gehende Miniaturisierung und neue Fertigungstechniken sowie die ebenfalls neu aufkommende Möglichkeit, Brackets direkt auf den Zahn zu kleben, ging man schrittweise von den biegestanztechnisch gefertigten Brackets ab und fertigte die Brackets aus Metall, erst spanabhebend und später mittels Pulverspritzgiessen in der sogenannten MIM-Technik. Hierbei steht MIM für Metal Injection Molding. Ein Beispiel eines solchen Brackets, das bereits teilweise aus Vollmetall gefertigt war und lediglich noch einen scharnierbeweglich damit verbundenen Deckel zeigt, offenbart beispielsweise die US 3 091 857. Noch 1969 wurde das US Patent 3 543 404 angemeldet, welches im wesentlichen aus einer Basisplatte bestand, die biegestanztechnisch gefertigt wurde und Schlaufen aufwies, die zur lösbaren Befestigung eines Ligaturbügels diente. Der Ligaturbügel aus Draht drückte den Behandlungsbogen auf die Sichtseite der Basisplatte.

Aus US4028809 ist weiter ein biegestanztechnisch hergestelltes Bukkalröhrchen bekannt, welches allerdings kompliziert im Aufbau ist.

Die Biegestanztechnik hat sich in den letzten 50 Jahren stark weiter entwickelt und eine weitere Miniaturisierung ist nun möglich mit komplexeren Formgebungen. Der Anmelder hat diese Technologie wieder aufgenommen. Aus der WO 2015/140026 ist ein biegestanztechnisch gefertigtes, selbstlegierendes Bracket mit einer schwenkbaren Platte bekannt, wobei beide Teile des kieferorthopädischen Brackets, nämlich die Basisplatte und die Platte, achsfrei miteinander durch gegeneinander Verschwenken miteinander verbindbar sind. Dieses selbstlegierende Bracket kann entsprechend der realisierbaren Kleinheit sowohl lingual als auch bukkal eingesetzt werden und dient der Behandlung der meisten vorkommenden Fehlstellungen der Zähne.

Es besteht aber ein Bedürfnis für ein besonders einfaches und kleines kieferorthopädisches Bracket, welches für eine beschränkte Indikation anwendbar ist, dafür aber besonders einfach in der Verwendung ist. Ein solches, stark vereinfachtes kieferorthopädisches Bracket der eingangs genannten Art sollte insbesondere für folgende Indikationen geeignet sein:
- Für die Verwendung von Zahnbogensegmenten von bis zu acht Zähnen mit grundsätzlich einfachen Fehlstellungen,
- für stark ausgeprägte Fehlstellungen einzelner Zähne, bei sonst mehr oder weniger harmonischem Zahnbogen;
- zur Unterstützung und Vereinfachung von Behandlungen mit Schienen (wie z.B. INVISALINE® (ein eingetragenes Warenzeichen der Firma Align Technology, Inc.));
- zur lingualen Behandlung bei leichten Frontzahnkorrekturen, wobei der letzte zur Korrektur nötige Draht gleich auch zur Langzeitretention gelassen werden kann;
- als Einzelelement zur Korrektur einfacher bis sehr stark distropisch durchbrechender Zähne.

Es ist folglich die Aufgabe der vorliegenden Erfindung, ein besonders einfaches kieferorthopädisches, biegestanztechnisch gefertigtes Bracket zur Verfügung zu stellen, welches für die obgenannten Indikationen geeignet ist.

Diese Aufgabe löst ein kieferorthopädisches Bracket der eingangs genannten Art mit den Merkmalen des Anspruchs 1. Weitere erfindungsgemässe Ausführungsformen des Erfindungsgedanken gehen aus den abhängigen Ansprüchen hervor und sind anhand der nachfolgenden Beschreibung mit Bezug auf die anliegenden Zeichnungen beschrieben.

Die Offenbarung betrifft auch die Verwendung des erfindungsgemässen kieferorthopädischen Brackets und zeigt zudem ebenfalls Mittel zum Setzen des beanspruchten kieferorthopädischen Brackets. Die Einheit der Erfindung bezüglich den erfindungsgemässen kieferorthopädischen Brackets und der beanspruchten Mittel zum Setzen dieser Brackets ergibt sich aus der zwingenden formlichen Anpassung der Mittel aufeinander nach dem Schlüssel/Schloss-Prinzip. Für andere kieferorthopädische Brackets sind diese Mittel nicht verwendbar.

In der Zeichnung sind verschiedene Ausführungsformen des Erfindungsgegenstandes dargestellt und nachfolgend detailliert beschrieben. Es zeigt:
- Fig. 1: eine perspektivische Ansicht eines nicht erfindungsgemässen kieferorthopädischen Brackets mit Blick auf die Sichtseite, und
- Fig. 2: mit Blick auf die Klebeseite;
- Fig. 3: zeigt dasselbe Bracket im Grundriss, und
- Fig. 4: in einem Seitenriss;
- Fig. 5: zeigt eine Variante des Brackets gemäss den Fig. 1 bis 4, jedoch mit zwei fluchtend in Linie angeordneten Führungswölbungen in perspektivischer Darstellung mit Blick auf die Sichtseite, und
- Fig. 6: mit Blick auf die Klebeseite;
- Fig. 7: zeigt eine erste Variante eines erfindungsgemäßen kieferorthopädischen Brackets in perspektivischer Ansicht mit Blick auf die Sichtseite, während
- Fig. 8: dieses Bracket in der Aufsicht und
- Fig. 9: in einem Seitenriss zeigt, während
- Fig. 10: dieses Bracket in einem Seitenriss mit Blick auf die Längsseite zeigt;
- Fig. 11: zeigt eine zweite Ausführungsform des erfindungsgemässen Brackets, wiederum in perspektivischer Ansicht, und
- Fig. 12: dieses Bracket in der Aufsicht, und
- Fig. 13: in einem Seitenriss;
- Fig. 14 und 15: zeigen einen Protektor mit Haltestab und Haltegriff in perspektivischer Darstellung, und
- Fig. 16: diesen Protektor mit Blick auf die Stirnseite des Haltestabes mit einem aufgesteckten kieferorthopädischen Bracket gemäss Fig. 9;
- Fig. 17 und 18: zeigen einen zweiteiligen Protektor während des Aufsetzens des Brackets sowie einen zangenartigen Greifer, der die beiden Protektor-Hälften mit dem aufgesetzten Bracket zu greifen vermag.

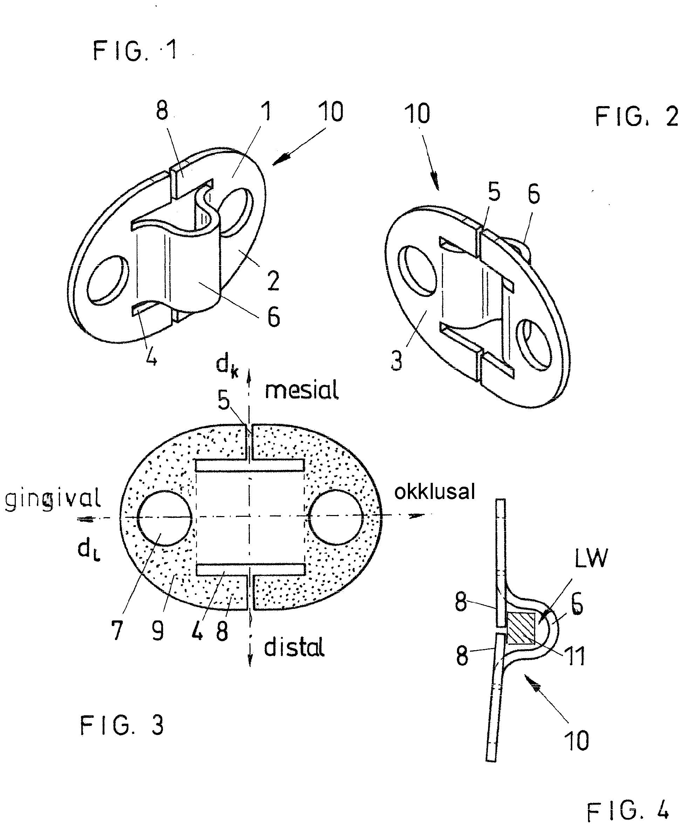

In der nachfolgenden Beschreibung erfolgen die Richtungsangaben nach kieferorthopädischen Bezeichnungen, die für die auf die jeweiligen Zähne befestigten kieferorthopädischen Brackets zutreffend sind. In den Figuren 1 bis 4 ist ein erstes Beispiel eines nicht erfindungsgemässen kieferorthopädischen Brackets dargestellt. Es besteht aus einer im wesentlichen planen Basisplatte 1. Diese Basisplatte besitzt eine Sichtseite 2 und eine Klebeseite 3. Die Sichtseite ist jene vom Zahn wegweisende Seite, die Klebeseite jene zum Zahn hingerichtete Seite. Da dieses kieferorthopädische Bracket sowohl lingual als auch bukkal verwendet werden kann, werden die Begriffe lingual und bukkal für die Bezeichnung der beiden Seiten nicht verwendet. Die Sichtseite ist bei einer bukkalen Anwendung auf der bukkalen Seite, während die Klebeseite oder Klebefläche auf der lingualen Seite liegt, während bei einer lingualen Seite dies genau umgekehrt ist. Die Basisplatte 1 hat hier im wesentlichen eine ovale Gestalt. Deren hier eingezeichnete Längsachse dₗ verläuft dabei in okklusal-gingivaler Ausrichtung. Die kurze Achse dₖ verläuft hingegen in mesial-distaler Ausrichtung. Parallel zur Längsachse dₗ und parallel zueinander verlaufen zwei schlitzförmige Ausstanzungen 4. Mittig und senkrecht zu den schlitzförmigen Ausstanzungen 4 verlaufen jeweils von jeder Seitenkante auf der kurzen Achse dₖ bis zu den schlitzförmigen Ausstanzungen 4 je eine Ausstanzung in mesial-distaler Richtung. Diese kurzen Ausstanzungen sind mit 5 bezeichnet. Zwischen den beiden schlitzförmigen Ausstanzungen 4, die in gingival-okklusaler Richtung verlaufen, ist eine längliche Führungswölbung 6 vorhanden. Diese Führungswölbung verläuft ebenfalls in mesial-distaler Richtung. Die Führungswölbung 6 ist in der Breite und Höhe so bemessen, dass ein Behandlungsbogen 11 darin eine geführte Aufnahme findet und dabei seitlich an der Führungswölbung 6 auf Laschen 8 der Basisplatte 1 aufliegt.

Bei der Fertigung des kieferorthopädischen Brackets 10 ist die Basisplatte 1 erst völlig plan ausgestanzt, wobei die kurze Ausstanzung 5 noch wesentlich breiter ist als im fertigen Zustand, der in den Figuren 1 - 4 gezeigt ist. Erst nach dieser Stanzung erfolgt der Biegevorgang, bei dem die Führungswölbung 6 gebildet wird, wobei die Basisplatte gleichzeitig in Richtung der Längsachse zusammengeschoben wird, bis die kurzen Ausstanzungen 5 bis auf einen kleinen Spalt zusammengeschoben sind. Hierbei formt sich die Führungswölbung 6, so dass seitlich der Führungswölbung 6 durch die Ausstanzungen 4 und 5 sich vier Laschen 8 bilden.

Bei der Stanzung kann auf der Klebeseite 3 eine rasterförmige Struktur gebildet werden, wobei sinnvollerweise dies auf jenen Bereich beschränkt ist, der bei der Verwendung direkt auf dem Zahn aufliegt. In der Fig. 3 ist dieser Bereich als strukturierter Bereich 9 punktiert gekennzeichnet. Die Strukturierung im Bereich 9 dient der Erhöhung der Haftung des Klebstoffes am kieferorthopädischen Bracket 1. Im strukturierten Klebebereich 9 können optional zusätzliche Durchbrüche 7 eingeformt sein. Diese Durchbrüche 7 dienen einerseits dem Zusammenschieben der Bracket-Hälften in Verlaufsrichtung der Längsachse aufeinander zu und haben den zusätzlichen Nutzen, dass Licht einer Polymerisationslampe zur Aushärtung eines Klebstoffes besser zugeführt werden kann.

In der Fig. 4 ist ein Behandlungsbogen 11 dargestellt, der unter der Führungswölbung 6 hindurch auf die seitlichen Laschen 8 der Basisplatte 1 aufliegend führend gehalten ist. Im hier dargestellten Beispiel ist der Behandlungsbogen 11 mit einem quadratischen Querschnitt gezeigt. Durch dieselbe Führungswölbung 6 kann aber auch ein Behandlungsbogen mit rundem, mehreckigem oder auch ovalem Querschnitt eingeführt werden.

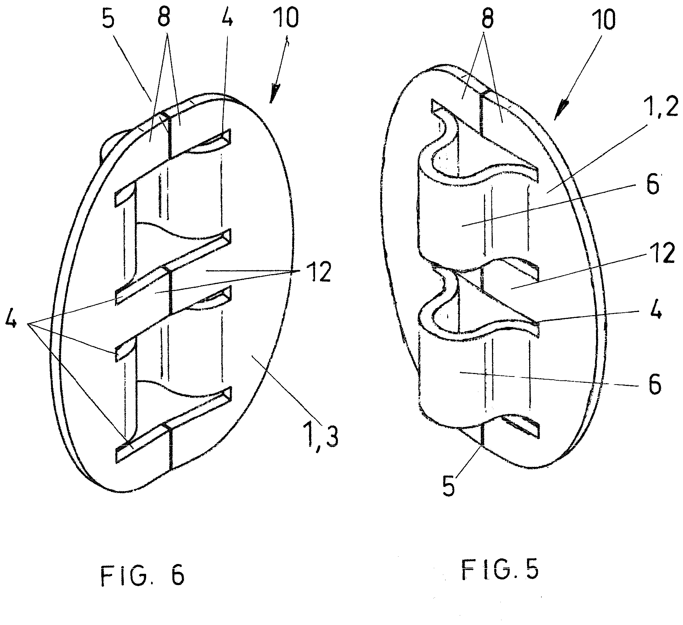

Eine Variation des kieferorthopädischen Brackets 10 in den Figuren 5 und 6 gezeigt. Hier sind zwei parallel verlaufende Führungswölbungen 6 vorgesehen, die somit eine längere Führung des Behandlungsbogens 11 im Bracket ergeben. Entsprechend sind hier vier parallele schlitzförmige Ausstanzungen vorhanden und neben den seitlichen Laschen 8 bleiben hier auch zwischen den beiden benachbarten Führungswölbungen 6 zwei mittlere Laschen 12. Die beiden Führungswölbungen 6 sind genau fluchtend aufeinander ausgerichtet und verlaufen wiederum in mesial-distaler Richtung. Das kieferorthopädische Bracket 10 wird dadurch etwas grösser und ist entsprechend geeignet, um auf den Molaren oder den oberen Frontzähnen angebracht zu werden. Je nach der Patientensituation lassen sich diese Brackets aber durchaus auch auf andere Zähne anbringen.

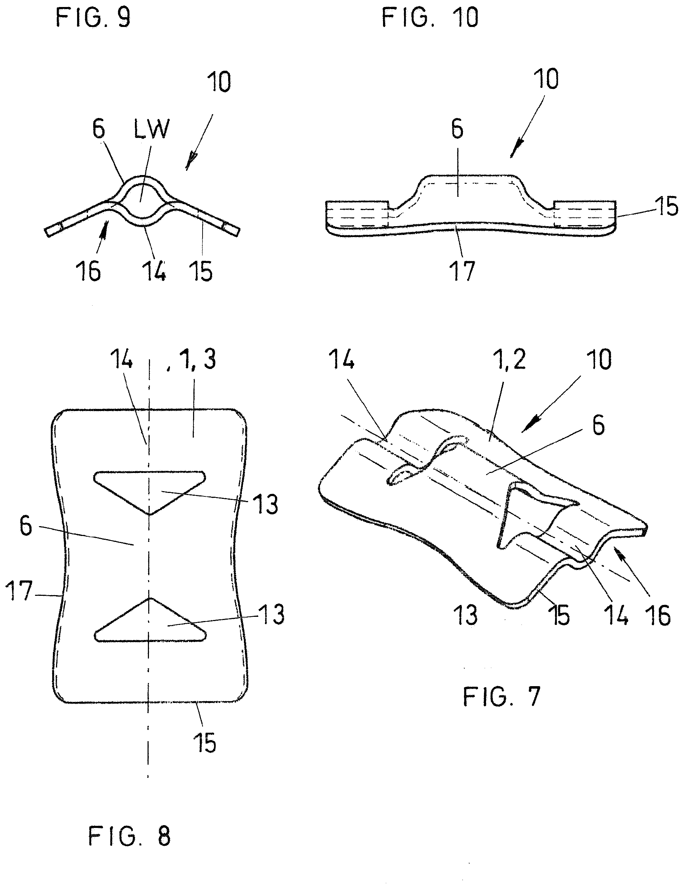

Eine erste Ausführungsform des erfindungsgemässen kieferorthopädischen Brackets zeigen die Figuren 7 bis 10. Bei dieser Ausführungsform hat die Basisplatte 1 einen im wesentlichen rechteckigen Grundriss mit gerundeten Ecken. In die Basisplatte 1 sind fensterförmige, im wesentlichen dreieckige Ausstanzungen 13 ausgeformt. Die dreieckigen, fensterförmigen Ausstanzungen 13 besitzen gerundete Ecken, um entsprechende Kerb-Wirkungen zu vermeiden. Zwischen den beiden fensterförmigen Ausstanzungen 13 ist wiederum eine Führungswölbung 6 zur Sichtseite 2 hin nach oben gewölbt geformt. Die Führungswölbung 6 verläuft selbstverständlich auch hier wieder in mesial-distaler Richtung. Von den fensterförmigen Ausstanzungen 13 verlaufen zur kürzeren, mesialen bzw. distalen Seitenkante 15 zur Klebeseite hin nach unten gewölbte Führungsrinnen 14. Seitlich der Führungsrinnen verläuft die Basisplatte wieder leicht zur Klebeseite hin ansteigend. Hierdurch entstehen unter dem kieferorthopädischen Bracket auf der Klebeseite 2 Aufnahmeräume 16 zur Aufnahme des Klebstoffes. Bei dieser Ausführung sind keine Durchbrüche 7 erforderlich, da die fensterförmigen Ausstanzungen 13 eine genügende Öffnung zur Lichtzuführung zur Klebeseite hin bilden. Licht ist ebenfalls durch die seitlich der Führungsrinnen 14 entstehenden Erhebungen, welche die erwähnten Räume 16 zur Aufnahme von Klebstoff bilden, zuführbar. Zwar ist bei dieser Ausgestaltungsform des kieferorthopädischen Brackets 10 die Länge der Führungswölbung durch die dreieckigen fensterförmigen Ausstanzungen 13 verkürzt, doch durch die seitlich folgenden Führungsrinnen 14 ist ein Behandlungsbogen nicht nur im Bereich der Führungswölbung 6, sondern auch im Bereich der Führungsrinnen 14 geführt.

Lediglich zum besseren Verständnis sei darauf hingewiesen, dass die in den Längskanten 17 erkennbare mittlere Einschnürung sich erst bei der biegetechnisch gebildeten Führungswölbung 6 bildet. Aus Platzgründen ist eine solche Einschnürung nicht erforderlich, da diese Einschnürung lediglich in einer gingival-okklusalen Richtung verläuft und in dieser Richtung meist kein Platzproblem existiert.

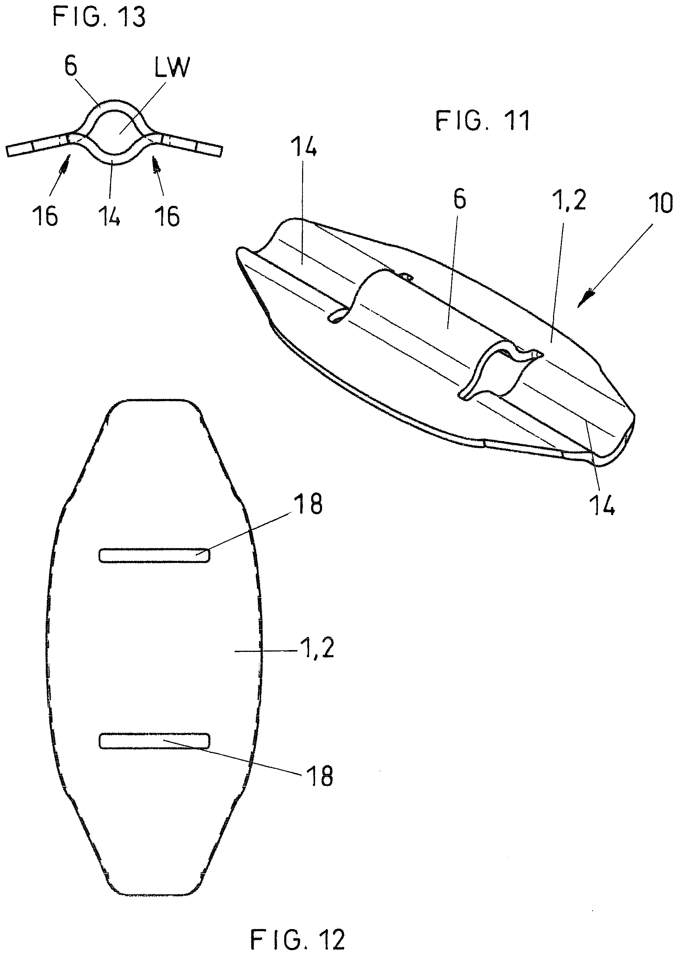

In den Fig. 11 - 13 ist schliesslich noch eine zweite Ausführungsform des erfindungsgemässen kieferorthopädischen Brackets 1C dargestellt. Die Basisplatte 1 hat hier im Grundriss eine etwa schiffchenförmige Gestalt und statt der fensterförmigen Ausstanzungen 13 sind hier zwei parallele, relativ weit auseinanderliegende, knopflochförmige Ausstanzungen 18 angebracht. Diese Ausstanzungen 18 verlaufen in der okklusalgingivalen Richtung. Im Seitenriss gemäss der Fig. 13 erkennt man wiederum die seitlichen Führungsrinnen 14 sowie die Klebstoffräume 16. Obwohl diese Ausführungsvariante im orthodentaltechnischen Sinne durchaus sinnvoll ist, ist diese Variante weniger bevorzugt, da bei dieser Version die Einführung des Behandlungsbogens unter die Führungswölbung 6 gegenüber der Version mit den fensterförmigen Ausstanzungen 13 schwieriger ist. Die dreieckigen, fensterförmigen Ausstanzungen 13 bewirken eine Zentrierung bei der Einführung des Behandlungsbogens, während die senkrecht aufstehende Stirnfläche der Führungswölbung 6 bei der Ausführung gemäss den Figuren 11 - 13 diese Zentrierung nicht bewirkt und daher eine sehr exakte Ausrichtung des Behandlungsbogens erforderlich macht, damit der Behandlungsbogen nicht stirnseitig an der Seitenfläche der Aufwölbung 6 anstösst.

Üblicherweise sind kieferorthopädische Brackets exakt auf die Dimension und die Form eines Behandlungsbogens angepasst. Dies bedingt eine relativ grosse Zahl verschiedener Brackets, je nach Querschnittsform und Durchmesser der verwendeten Behandlungsbogen. Die kieferorthopädischen Brackets erfordern diese exakte Übereinstimmung von kieferorthopädischem Bracket und Behandlungsbogen nicht. Im Gegensatz zu einem aus Metall spanabhebend oder gesintert gefertigten Bracket mit entsprechendem Slot, der sich nicht verändern lässt, kann beim kieferorthopädischen Bracket die Führungswölbung mittels einer Zange geringfügig verformt werden, um die Durchführungsöffnung hier zu reduzieren, oder auch um ggf. einen leicht erhöhten Druck auf den Behandlungsbogen auszuüben. Diese Verwendung ist bei keinem heute auf dem Markt erhältlichen Bracket realisierbar, ohne dass dabei eine Klappe oder Ligaturen benötigt werden. Diese Technik bzw. diese Verwendung erlaubt auch, Behandlungsbogen mit praktisch beliebigen Querschnittformen einzusetzen. Ist die lichte Weite der Durchführung unterhalb der Führungswölbung 6 grösser als der Querschnitt des Behandlungsbogens, kann in die Führungswölbung 6 auch eine Kerbung eingedrückt werden, so dass damit die lichte Weite unter der Führungswölbung reduziert wird.

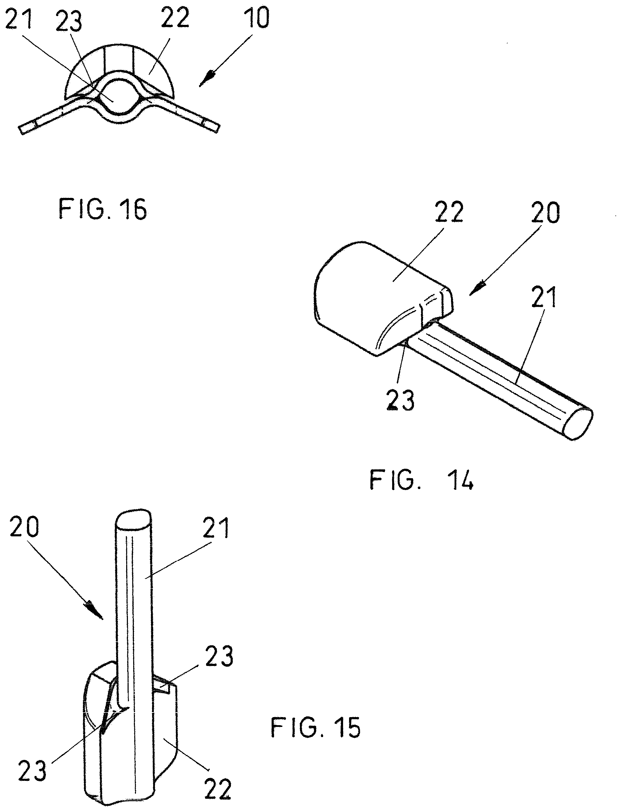

Bei den heute bekannten Brackets bestehen keine Durchbrüche in der Basisplatte, die ein Eindringen des aufzubringenden Klebstoffes in den Bereich des Slots ermöglichen würden. Bei den Brackets besteht diese Gefahr sehr wohl. Entsprechend müssen für diese Brackets speziell geeignete Protektoren angeboten werden, die verhindern, dass Klebstoff in den Führungsbereich für den Behandlungsbogen eindringen kann. In den Figuren 14 bis 16 ist ein solches besonders einfach ausgestaltetes Mittel in Form eines Protektors gezeigt. Dieser Protektor 20 besteht im wesentlichen aus einem Haltestab 21, der im Querschnitt mindestens annähernd der lichten Weite LW des kieferorthopädischen Brackets 10 entspricht. Die lichte Weite bilden die Teile des Brackets, an denen der Behandlungsbogen auf- bzw. anliegt. Bei den Ausführungen gemäss den Figuren 1 bis 6 sind dies die seitlichen Laschen 8 bzw. ggf. die mittleren Laschen 12 einerseits und andererseits die Führungswölbung 6 bzw. die Führungswölbungen 6. Im Prinzip genügt es, wenn der Protektor 20 nur aus einem Haltestab 21 besteht. Für eine verbesserte Handhabung ist es jedoch durchaus sinnvoll, den Haltestab 21 einseitig mit einem Haltegriff 22 zu versehen. Der Haltegriff 22 übergreift den Haltestab 21 unter Freilassung eines Klemmschlitzes 23. Hierdurch lässt sich das kieferorthopädische Bracket 10 soweit auf den Haltestab 21 aufschieben, bis die Führungswölbung 6 in den Klemmschlitz 23 zwischen dem Haltestab 21 und dem Haltegriff 22 klemmend und formschlüssig gehalten ist. Hierdurch ist das kieferorthopädische Bracket nicht nur gegen ein Herabfallen gesichert, sondern es ist auch lagebestimmt gehalten.

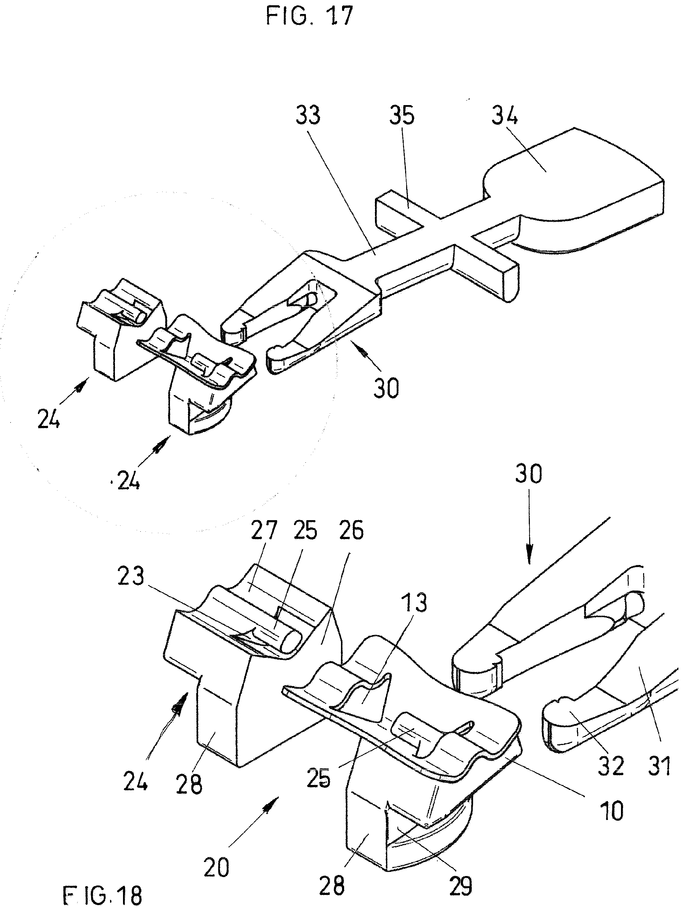

In den Figuren 17 und 18 ist ein alternativer Protektor dargestellt. Dieser Protektor 20 ist zweiteilig gestaltet. Er besteht aus zwei Formstücken 24, an denen je ein Haltestabteil 25 angeformt ist. In jedem Formstück 24 ist ein Klemmschlitz 23 eingeformt, der so tief in das jeweilige Formstück hinein verläuft, dass hierdurch die Haltestabteile 25 ausgebildet sind. Die Länge der Haltestabteile 25 ist so lang, dass diese nachdem diese seitlich unter die Führungswölbung 6 eingeschoben sind, sich mindestens annähernd berühren. Hierbei liegen die Seitenkanten der Führungswölbung in den entsprechenden Klemmschlitzen 23 der beiden Formstücke 24 an einer Stirnfläche der Klemmschlitze 23 an. Gleichzeitig liegen die planen Stirnflächen 26 der beiden Formstücke in dieser Position mindestens annähernd flächig aufeinander. In der Zeichnung, in der die Figur 17 die Gesamtsituation darstellt und die Fig. 18 eine vergrösserte Teilansicht zeigt, ist ein Formstück bereits auf das kieferorthopädische Bracket 1 vollständig aufgeschoben, während das zweite Formstück auf das kieferorthopädische Bracket korrekt ausgerichtet in einer Position zeigt, bevor dieses auf das kieferorthopädische Bracket aufgeschoben ist. Jedes Formstück 24 besitzt eine schalenförmige Vertiefung 27, in der das kieferorthopädische Bracket 1 mit seiner Sichtseite aufliegend formschlüssig Aufnahme findet. An der der schalenförmigen Vertiefung abgelegenen Seite ist an den Formstücken 24 je eine Klemmbacke 28 angeformt, in der an der den jeweiligen Stirnseiten gegenüberliegenden Seite Klemmnuten 29 eingeformt sind.

Der Protektor 20 umfasst als dritten Teil einen zangenförmigen Greifer 30. Der Greifer 30 besitzt zwei aufeinander zu gerichtete Klemmfinger 31, wobei jeder Klemmfinger 31 mit verdickten Fingerkuppen 32 versehen ist. Diese verdickten Fingerkuppen 32 liegen auf der der Einführungsseite gegenüberliegenden Seite an den Klemmbacken 28 an. Damit ist der Protektor 20 aus den beiden Formstücken 24 gesichert im Greifer 30 gehalten. Gleichzeitig ist natürlich das kieferorthopädische Bracket 1 gesichert gehalten. Nun kann der Klebstoff aufgebracht werden und falls es sich hierbei um einen lichtaushärtenden Klemmstoff handelt, kann dieser mit einer Polymerisationslampe durch Einstrahlung seitlich in die Klebstoffräume 16 ausgehärtet werden. Hierauf kann der zangenförmige Greifer 30 entfernt werden und anschliessend lassen sich die Formstücke 24 mit den Haltestabteilen 25 entfernen. Der entsprechende Klebstoff haftet nur äusserst gering an den Formstücken 28 bzw. an den Haltestabteilen 25, da diese aus einem entsprechenden Kunststoff gefertigt sind, an dem der Klebstoff kaum eine haftende Wirkung hat.

Während des Klebens müssen die Formteile bzw. das Bracket nicht nur gehalten sein, sondern dieses muss auch in einer korrekten Position auf einem Zahn angebracht sein. Hierzu ist der eigentliche zangenförmige Greifer 30 mit einem Zeigerstab 33 ausgerüstet. An diesem Zeigerstab 33 ist an der dem zangenförmigen Greifer gegenüberliegenden Ende eine Halteplatte 34 angeformt. Rechtwinklig zum Zeigerstab 33 ist ein Richtungszeiger 35 angeordnet. Dieser kreuzt den Zeigerstab 33. Der Richtungsanzeiger 35 zeigt dem behandelnden Kieferorthopäden den Richtungsverlauf der Führungswölbung bzw. selbstverständlich auch der Führungsrinnen an, und der Kieferorthopäde weiss nun, wie er das Bracket auf den Zahn ausrichten muss, damit der Behandlungsbogen hier den erwünschten Verlauf hat.

Sämtliche Mittel zum Setzen des kieferorthopädischen Brackets 1 sind aus Kunststoff gefertigt.

Das kieferorthopädische Bracket, welches in der Stanzbiegetechnik gefertigt wird, wird bevorzugterweise aus einem kaltgewalzten Blech aus Kobalt-Chrom-Nickel gefertigt, das sich besonders gut verarbeiten lässt, da es nach der Formgebung nur eine äusserst geringe Rückfederung bewirkt. Zudem lässt sich dieses bevorzugte Blechmaterial aus CoCrZONi-1-6Mo-7-Legierung, welches unter der Bezeichnung Phynox® auf dem Markt erhältlich ist, durch entsprechende Wärmebehandlung zu hoher Härte vergüten.

Obwohl die kieferorthopädischen Brackets für sich allein auf dem Markt verkäuflich wären, wird man im Normalfall vorteilhafterweise das Bracket zusammen mit den entsprechenden Mitteln zum Setzen des Brackets in einem Bausatz anbieten. Dieser enthält dann sowohl das kieferorthopädische Bracket 1 als auch den Protektor 20 und ggf. den zweiteiligen Protektor aus den beiden Formstücken und den zangenförmigen Greifer 30, wie dieser zuvor beschrieben worden ist.

### Bezugszeichenliste:

- 1: Basisplatte
- 2: Sichtseite
- 3: Klebeseite
- 4: schlitzförmige Ausstanzung
- 5: kurze Ausstanzungen
- 6: Führungswölbung
- 7: Durchbrüche
- 8: seitliche Laschen
- 9: strukturierter Klebebereich
- 10: kieferorthopädisches Bracket
- 11: Behandlungsbogen
- 12: mittlere Laschen
- 13: fensterförmige Ausstanzungen
- 14: Führungsrinnen
- 15: kurze, ventrale bzw. dorsale Seitenkanten
- 16: Klebstoffräume
- 17: Längskanten
- 18: knopflochförmige Ausstanzungen
- 20: Protektor
- 21: Haltestab
- 22: Haltegriff
- 23: Klemmschlitz
- 24: Formstücke
- 25: Haltestabteil
- 26: Stirnflächen
- 27: schalenförmige Vertiefung
- 28: Klemmbacke
- 29: Klemmnuten
- 30: zangenförmiger Greifer
- 31: Klemmfinger
- 32: Fingerkuppen, verdickt
- 33: Zeigerstab
- 34: Halteplatte
- 35: Richtungsanzeiger
- LW: lichte Weite

## Patentansprüche

1. Aus Blech biegestanztechnisch gefertigtes kieferorthopädisches Bracket (10), umfassend eine Basisplatte (1) mit einer Klebeseite (3) und einer Sichtseite (2) und Mitteln zur geführten Halterung eines Behandlungsbogens (11), wobei das Bracket (10) einstückig ist und mindestens eine aus der Ebene der Basisplatte (1) heraus geformte, längliche, mesial-distal verlaufende Führungswölbung (6) als Führungsmittel aufweist, unter die der Behandlungsbogen (11) auf der Basisplatte (1) aufliegend hindurch führbar ist, **dadurch gekennzeichnet, dass** die Basisplatte (1) zwei fensterförmige Ausstanzungen (13) aufweist, und dass die Basisplatte (1) von den Ausstanzungen zum seitlichen, mesialen bzw. distalen Rand (15) nach unten zur Klebeseite hin zu seitlichen Führungsrinnen (14) geformt ist, während der Bereich zwischen den fensterförmigen Ausstanzungen (13) zur Sichtseite (2) hin zu der Führungswölbung (6) geformt ist.

2. Bracket nach Anspruch 1, **dadurch gekennzeichnet, dass** dieses aus einer CoCrZONi-1-6Mo7-Legierung gefertigt ist.

3. Bracket nach einem der Ansprüche 1 bis 2 und Mittel zum Setzen des kieferorthopädischen Brackets, **dadurch gekennzeichnet, dass** das Bracket vor dem Setzen ein Protektor (20) mit einen der lichten Weite (LW) der Führungswölbung (6) angepassten und durch die Führungswölbung (6) hindurch einschiebbaren Haltestab (21) umfasst.

4. Bracket und Mittel nach Anspruch 3, **dadurch gekennzeichnet, dass** der Haltestab einseitig mit einem Haltegriff (22) verbunden ist und zwischen Haltegriff (22) und Haltestab (21) ein Klemmschlitz geformt ist, in dem der seitliche Rand der Führungswölbung (6) kraft- und formschlüssig Aufnahme findet.

5. Bracket und Mittel nach Anspruch 3, **dadurch gekennzeichnet, dass** der Protektor (20) zweiteilig ist, wobei je ein Teil mit je einem Haltestabteil (25) versehen ist und je an Formstücke (24) angeformt sind, wobei je ein Teil des zweiteiligen Protektors (20) mit seinem Haltestabteil (25) von je einer Seite in die Führungswölbung (6) des kieferorthopädischen Brackets (10) einschiebbar ist und im vollständig eingeschobenen Zustand die beiden Formstücke seitlich an der Führungswölbung (6) anliegen und von einem die beiden Teile klemmend haltenden zangenartigen Greifer (30) greifbar sind.

6. Bracket und Mittel nach Anspruch 5, **dadurch gekennzeichnet, dass** die Mittel eine die beiden Teile klemmend haltenden zangenartigen Greifer (30) umfassen.

7. Bracket und Mittel nach Anspruch 6, **dadurch gekennzeichnet, dass** der Greifer (30) mit einem Zeigerstab (33) versehen ist, an dessen Ende eine Halteplatte (34) angeformt ist.

8. Bracket und Mittel nach Anspruch 7, **dadurch gekennzeichnet, dass** am Zeigerstab (33) mindestens ein diesen rechtwinklig schneidender Richtungszeiger (35) angeformt ist.

9. Bracket und Mittel nach den Ansprüchen 3 bis 8, **dadurch gekennzeichnet, dass** die Mittel aus Kunststoff gefertigt sind.

## Claims

1. An orthodontic bracket (10) made of sheet metal by punching and bending, comprising a base plate (1) with an adhesive side (3) and a visible side (2) and means for guided retention of a treatment arch (11), the bracket (10) being in one piece and having at least one elongate guide arch (6) running in mesial-distal, shaped out of the plane of the base plate (1), as guide means beneath which the treatment arch (11) can be guided while resting on the base plate (1),
**characterised in that**
the base plate (1) has two window-shaped punch holes (13), and that the base plate (1) is shaped downwards towards the adhesive side from the punch holes to the lateral, mesial and distal edges (15) to form lateral guide channels (14), while the area between the window-shaped punch holes (13) is shaped towards the visible side (2) to form the guide arch (6).

2. The bracket according to Claim 1,
**characterised in that**
it is manufactured from a CoCrZONi-1-6Mo7 alloy.

3. The bracket according to any one of Claims 1 to 2 and means for positioning the orthodontic bracket,
**characterised in that**
before the positioning, the bracket comprises a protector (20) having a retaining rod (21), which is adapted to the inside clearance (LW) of the guide arch (6) and can be inserted through the guide arch (6).

4. The bracket and means according to Claim 3,
**characterised in that**
the retaining rod is connected on one side to a handle (22), and a clamping slot is shaped between the handle (22) and the retaining rod (21), in which clamping slot the lateral edge of the guide arch (6) is accommodated in a force-locking and positive-fitting manner.

5. The bracket and means according to Claim 3,
**characterised in that**
the protector (20) is in two parts, wherein each part is provided with a retaining rod part (25) and is formed on moulded pieces (24), wherein each part of the two-part protector (20) can be inserted with its retaining rod part (25) from one side into the guide arch (6) of the orthodontic bracket (10), and the two moulded pieces, when completely inserted, laterally abut the guide arch (6) and can be gripped by a pliers-type gripper (30) holding the two parts in a clamping manner.

6. The bracket and means according to Claim 5,
**characterised in that**
the means comprise a pliers-type gripper (30) holding the two parts in a clamping manner.

7. The bracket and means according to Claim 6,
**characterised in that**
the gripper (30) is provided with a pointer rod (33), on the end of which a retaining plate (34) is formed.

8. The bracket and means according to Claim 7,
**characterised in that**
at least one directional pointer (35) intersecting the pointer rod at a right angle is formed on the pointer rod (33).

9. The bracket and means according to Claims 3 to 8,
**characterised in that**
the means are manufactured from plastic.

## Revendications

1. Attache orthodontique (10) fabriquée en tôle selon la technique de pliage et de découpage combinés, comprenant une plaque de base (1) avec une face de collage (3) et une face visible (2) et des moyens pour la retenue guidée d'un arc de traitement (11), sachant que l'attache (10) est constituée en un seul tenant et comporte en tant que moyen de guidage au moins une cambrure de guidage (6) allongée, formée de manière saillante hors du plan de la plaque de base (1) et s'étendant de manière mésiale-distale, sous laquelle l'arc de traitement (11) peut être introduit en applique sur la plaque de base (1), **caractérisés en ce que** la plaque de base (1) comporte deux découpes (13) en forme de fenêtre et **en ce que** la plaque de base (1) est formée, des découpes au bord (15) latéral, mésial ou distal, vers le bas en allant vers le côté de collage, en rainures de guidage (14) latérales, alors que la zone située entre les découpes (13) en forme de fenêtre est formée en allant vers el côté visible (2) en cambrure de guidage (6).

2. Attache selon la revendication 1, **caractérisée en ce que** celle-ci est fabriquée dans un alliage CoCrZONi-1-6Mo7.

3. Attache selon l'une quelconque des revendications 1 à 2 et moyens pour poser l'attache orthodontique, **caractérisés en ce que** l'attache comprend avant la pose, un protecteur (20) avec une tige de retenue (21) adaptée à la largeur libre (LW) de la cambrure de guidage (6) et pouvant être introduite dans la cambrure de guidage (6) .

4. Attache et moyens selon la revendication 3, **caractérisés en ce que** la tige de retenue est reliée d'un côté à un manche (22) et une fente de serrage est formée entre le manche (22) et la tige de retenue (21) dans laquelle le bord latéral de la cambrure de guidage (6) est reçu par conformité de force et de forme.

5. Attache et moyens selon la revendication 3, **caractérisés en ce que** le protecteur (20) est constitué en deux parties, sachant que chaque partie est respectivement dotée d'une partie de tige de retenue (25) et sont conformées respectivement sur des pièces formées (24), sachant que chaque partie du protecteur en deux parties (20) avec sa partie de tige de retenue (25) peut être introduite respectivement d'un côté dans la cambrure de guidage (6) de l'attache orthodontique (10) et les deux pièces formées viennent s'appliquer latéralement à la cambrure de guidage (6) à l'état complètement introduit et peuvent être saisies par un préhenseur (30) de type pince maintenant les deux parties en serrant.

6. Attache et moyens selon la revendication 5, **caractérisés en ce que** les moyens comprennent un préhenseur (30) de type pince maintenant les deux parties en serrant.

7. Attache et moyens selon la revendication 6, **caractérisés en ce que** le préhenseur (30) est doté d'une tige d'index (33) à l'extrémité de laquelle est conformée une plaque de retenue (34).

8. Attache et moyens selon la revendication 7, **caractérisés en ce que** sur la tige d'index (33), un index de direction (35) est conformé coupant perpendiculairement celle-ci.

9. Attache et moyens selon les revendications 3 à 8, **caractérisés en ce que** les moyens sont fabriqués en matière plastique.
